(19) Europäisches Patentamt

European Patent Office

Office européen des brevets

(11) **EP 0 891 593 B1**

(12) **EUROPÄISCHE PATENTSCHRIFT**

(45) Veröffentlichungstag und Bekanntmachung des Hinweises auf die Patenterteilung:
**01.03.2000 Patentblatt 2000/09**

(21) Anmeldenummer: **97917267.3**

(22) Anmeldetag: **21.03.1997**

(51) Int Cl.⁷: **G06F 17/30**, G06F 17/60, G06F 19/00, G06K 9/68, G06K 9/72

(86) Internationale Anmeldenummer:
**PCT/DE97/00583**

(87) Internationale Veröffentlichungsnummer:
**WO 97/38382 (16.10.1997 Gazette 1997/44)**

(54) **VERFAHREN ZUR AUTOMATISCHEN KLASSIFIKATION EINES AUF EINEM DOKUMENT AUFGEBRACHTEN TEXTES NACH DESSEN TRANSFORMATION IN DIGITALE DATEN**

METHOD OF AUTOMATICALLY CLASSIFYING A TEXT APPEARING IN A DOCUMENT WHEN SAID TEXT HAS BEEN CONVERTED INTO DIGITAL DATA

PROCEDE DE CLASSIFICATION AUTOMATIQUE D'UN TEXTE REPORTE SUR UN DOCUMENT APRES AVOIR ETE TRANSFORME EN DONNEES NUMERIQUES

(84) Benannte Vertragsstaaten:
**DE FR GB IT SE**

(30) Priorität: **03.04.1996 DE 19613400**

(43) Veröffentlichungstag der Anmeldung:
**20.01.1999 Patentblatt 1999/03**

(73) Patentinhaber: **SIEMENS AKTIENGESELLSCHAFT 80333 München (DE)**

(72) Erfinder:
• **BLOCK, Hans-Ulrich D-81675 München (DE)**
• **BRÜCKNER, Thomas D-81539 München (DE)**

(56) Entgegenhaltungen:
EP-A- 0 515 714       EP-A- 0 704 810
US-A- 5 255 187       US-A- 5 371 807
US-A- 5 463 773

• SIGIR '94. PROCEEDINGS OF THE SEVENTEENTH ANNUAL INTERNATIONAL ACM-SIGIR CONFERENCE ON RESEARCH AND DEVELOPMENT IN INFORMATION RETRIEVAL, PROCEEDINGS OF 17TH INTERNATIONAL CONFERENCE ON RESEARCH AND DEVELOPMENT IN INFORMATION RETRIEVAL. SIGIR 94, DUB, ISBN 3-540-19889-X, 1994, BERLIN, GERMANY, SPRINGER-VERLAG, GERMANY, Seiten 31-40, XP000475312 HOCH R: "Using IR techniques for text classification in document analysis" in der Anmeldung erwähnt

• INTERNATIONAL ASSOCIATION FOR PATTERN RECOGNITION WORKSHOP ON DOCUMENT ANALYSIS SYSTEMS, PROCEEDINGS OF THE INTERNATIONAL ASSOCIATION FOR PATTERN RECOGNITION WORKSHOP, KAISERSLAUTERN, GERMANY, OCT. 1994, ISBN 981-02-2122-3, 1995, SINGAPORE, WORLD SCIENTIFIC, SINGAPORE, Seiten 52-75, XP002035594 DENGEL A ET AL: "OfficeMAID-a system for office mail analysis, interpretation and delivery" in der Anmeldung erwähnt

**Beschreibung**

Aus [1] ist ein System bekannt, mit dem z. B. Geschäftsbriefdokumente kategorisiert werden können und dann in elektronischer oder Papierform weitergeleitet werden können, bzw. gezielt abgelegt werden können. Dazu enthält das System eine Einheit zur Layoutsegmentierung des Dokumentes, eine Einheit zur optischen Texterkennung, eine Einheit zur Adressenerkennung und eine Einheit zur Inhaltsanalyse und Kategorisierung. Für die Segmentierung des Dokumentes wird ein gemischter bottom-up- und top-down-Ansatz benutzt, der als Einzelschritte die

- Erkennung der zusammenhängenden Komponenten,
- Erkennung der Textlinien,
- Erkennung der Buchstabensegmente,
- Erkennung der Wortsegmente und
- Erkennung der Absatzsegmente umfaßt.

Die optische Texterkennung ist in drei Teile gegliedert:

- Buchstabenerkennung in Kombination mit lexikonbasierter Wortverifikation,
- Worterkennung,
- und Klassifizierung aus Buchstaben und wortbasierter Erkennung.

Die Adresserkennung wird mit einem unifikationsbasierten Parser durchgeführt, der mit einer attributierten kontextfreien Grammatik für Adressen arbeitet. Im Sinne der Adreßgrammatik korrekt geparste Textteile sind dementsprechend Adressen. Die Inhalte der Adressen werden über Merkmalsgleichungen der Grammatik bestimmt. Das Verfahren wird in [2] beschrieben.

Für die Inhaltsanalyse und Kategorisierung werden Information-Retrieval Techniken zur automatischen Indexierung von Texten benutzt. Im einzelnen sieht dies wie folgt aus:

- Morphologische Analyse der Wörter
- Eliminierung von Stoppwörtern
- Erstellung einer Wortstatistik
- Berechnung des Indextermgewichts mit aus dem Informations-Retrieval bekannten Formeln, wie z. B. der inversen Dokumenthäufigkeit.

Mittels der so berechneten Indextermgewichte wird nun für alle Kategorien eine dreistufige Liste signifikanter Wörter ermittelt, welche die jeweilige Kategorie charakterisiert. Wie in [1] beschrieben, werden diese Listen nach der Trainingsphase noch manuell überarbeitet.

Die Kategorisierung eines neuen Geschäftsbriefes erfolgt dann durch den Vergleich der Indexterme dieses Briefes mit den Listen der signifikanten Wörter für alle Kategorien. Die Gewichte der im Brief enthaltenen Indexterme werden je nach Signifikanz mit einer Konstanten multipliziert und aufsummiert. Durch Teilen dieser Summe durch die Anzahl der Indexterme im Brief ergibt sich somit für jede Klasse eine Wahrscheinlichkeit. Die genauen Berechnungen ergeben sich aus [3]. Ergebnis der Inhaltsanalyse ist dann eine nach Wahrscheinlichkeiten sortierte Hypothesenliste.

Die der Erfindung zugrundeliegende Aufgabe besteht darin, ein Verfahren anzugeben, nach dem die Inhaltsanalyse des Textes und damit die Textklassifikation verbessert wird. Dabei wird davon ausgegangen, daß der Text des Dokumentes bereits als digitale Daten vorliegt, die dann weiterverarbeitet werden.

Diese Aufgabe wird gemäß den Merkmalen des Patentanspruches 1 gelöst.

Weiterbildungen der Erfindung ergeben sich aus den abhängigen Ansprüchen.

Ein Anwendungsfall des Verfahrens ist die automatische Diagnose aus medizinischen Befunden. Fasst man einen medizinischen Befund als Text und eine Krankheit als eine Klasse auf, so kann man das Problem der automatischen Diagnose mit dem Verfahren der Textklassifikation lösen. Ein wesentlicher Vorteil des Verfahrens ist, daß es aus einer Menge von Befunden, deren Diagnose bekannt ist, automatisch und unüberwacht das zur Klassifikation nötige Wissen lernt. Für den Arzt ist kein zusätzlicher Aufwand nötig, er muß nur wie gewohnt den Befund schreiben. Gelernt wird aus den bereits vorhandenen Befunden. Nach der Trainingsphase wird dann mit Hilfe der gelernten Wissensquelle und Techniken der Fuzzy-Mengen ein Befund klassifiziert. Die dem Befund zugeordnete Klasse entspricht der diagnostizierten Krankheit.

Es wird zunächst davon ausgegangen, daß der zu untersuchende Text bereits in Form von ASCII-Daten vorliegt.

Vor der inhaltlichen Analyse eines Textes wird eine morphologische Analyse durchgeführt, die im ersten Schritt alle Wörter lemmatisiert (d.h. auf ihre Stammformen reduziert) und dann mit einem stochastischen Tagger lexikalische Mehrdeutigkeiten auflöst. Für die Lemmatisierung kann ein Verfahren nach [4] verwendet werden. Eine Beschreibung des verwendeten Taggers kann [5] entnommen werden. Ausgangspunkt fuer alle weiteren Bearbeitungsschritte ist immer der getaggte Text.

Die Textklassifikation ist trainingsbasiert. Aus einer Menge von Trainingstexten, deren Klassen bekannt sind, wird die Häufigkeit von Klassen, von Wörtern insgesamt und von Wörtern in den jeweiligen Klassen gezählt. Mit diesen Häufigkeiten wird dann die empirische Korrelation zwischen einem Wort und einer Klasse nach Pearson [6] berechnet. Diese Korrelation wird für alle Wörter und alle Klassen berechnet und gilt als Relevanz eines Wortes für eine Klasse.

Berücksichtigt werden nur Korrelationen größer einem Wert r_max, der sich aus der Prüfung der Unabhängigkeit auf einem Signifikanzniveau von z. B. 0.001 ergibt (siehe hierzu z. B. [7]). Als Ergebnis erhält man ein Lexikon, das die Relevanzen der Wörter für die Klassen enthält.

Ein Text wird nach dessen morphologischer Analyse mit Hilfe dieses Relevanzlexikons wie folgt klassifiziert: Für jede Klasse wird eine unscharfe Menge ermittelt, die alle relevanten Wörter enthält. Die Zugehörigkeitsfunktion $\mu_A$ der unscharfen Menge entspricht gerade dem Korrelationsmaß von Pearson. Um die wahrscheinlichste Klasse zu erhalten, wird für jede Klasse die Wahrscheinlichkeit ihrer unscharfen Menge von relevanten Wörtern berechnet. Dazu wird die in der Fuzzy-Theorie gebräuchliche Formel aus [8] benutzt, nämlich:

$$\mathtt{prob(A):=} \sum_{\mathbf{x}} \mu_A(\mathbf{x}) \cdot \mathtt{p(x)},$$

wobei $\mu_A$ die Zugehörigkeitsfunktion der unscharfen Menge A von relevanten Wörtern einer Klasse ist und p(x) als p (x ist relevant für A) interpretiert wird:

$$p(x \text{ ist relevant für } A) := p(A|x) = p(x,A) / p(x)$$

Als Ergebnis der Klassifikation wird die Klasse mit der wahrscheinlichsten Fuzzymenge ausgegeben.

Weiterbildungen der Erfindung ergeben sich aus den abhängigen Ansprüchen.

An Hand eines Ausführungsbeispieles wird die Erfindung weiter erläutert. Es zeigen

Figur 1 eine prinzipielle Darstellung des Verfahrens,

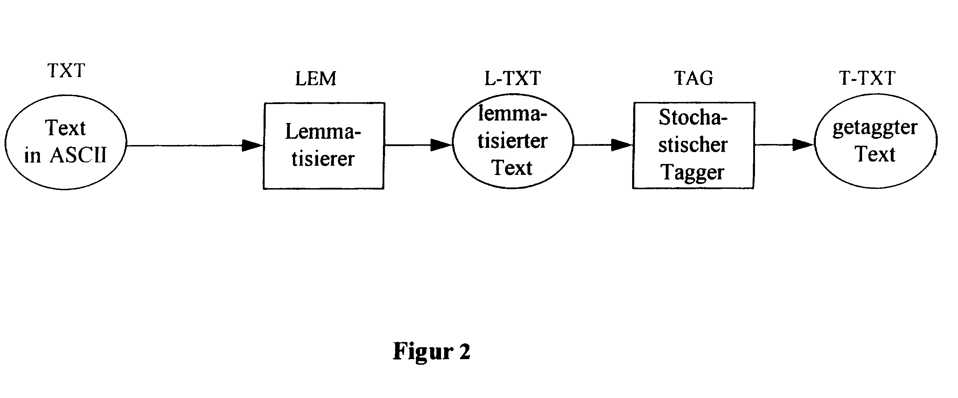

Figur 2 den Ablauf der Vorbereitung des Textes,

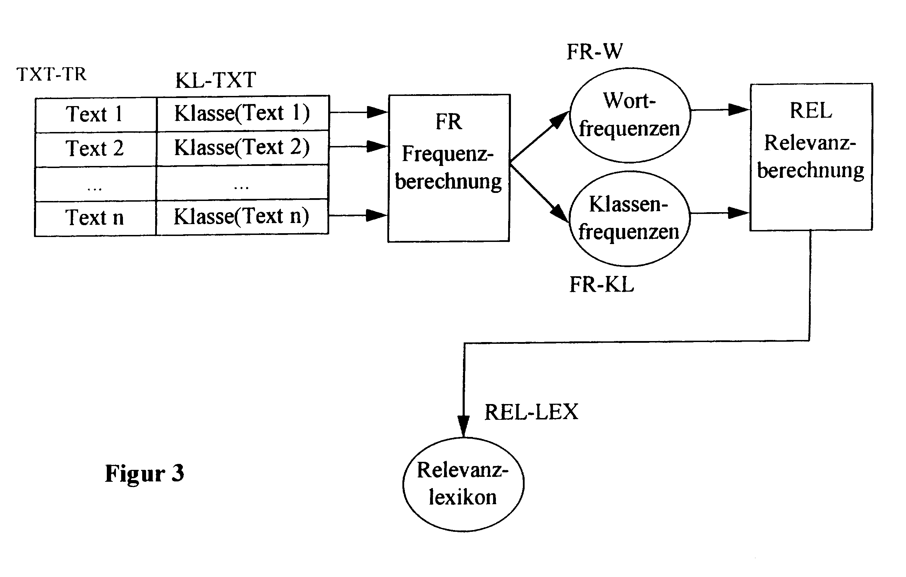

Figur 3 ein Verfahren zum Trainieren des Systems,
Figur 4 das Verfahren zur Klassifikation des Textes.

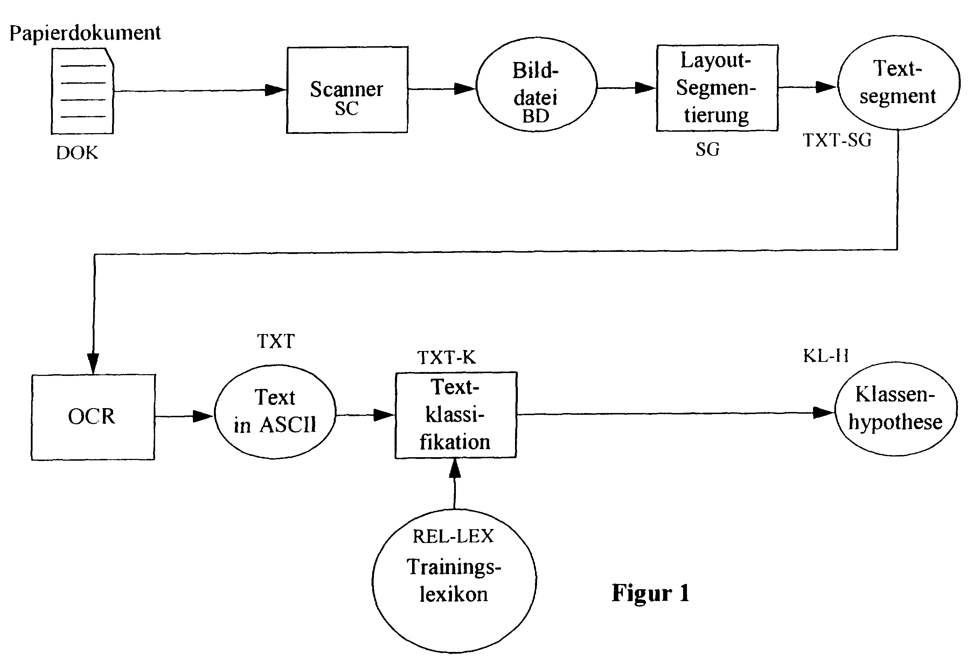

Aus Figur 1 ergibt sich eine prinzipielle Darstellung des Verfahrens. Der Text auf einem Papierdokument DOK soll klassifiziert werden. Zunächst wird das Dokument DOK mit Hilfe eines Scanners SC eingescannt und eine Bilddatei BD erzeugt. Mit Hilfe des in der europäischen Patentanmeldung 0 515 714 A1 bekannten Verfahrens wird der zu klassifizierende Text in einer Layoutsegmentierung SG segmentiert und das Textsegment TXT-SG gebildet. Man erhält wiederum eine Bilddatei, die jetzt nur noch den Textteil des Dokumentes enthält. Die Bilddaten dieses Textes werden nun mit OCR in ASCII-Daten umgewandelt. Diese sind in Fig. 1 mit TXT bezeichnet. Mit Hilfe eines Trainingslexikons REL-LEX wird die Textklassifikation TXT-K durchgeführt, somit eine Klassenhypothese erzeugt, die angibt, mit welcher Wahrscheinlichkeit der zu klassifizierende Text einer bestimmten Klasse zuzuordnen ist. Die Klassenhypothese ist in Fig. 1 mit KL-H benannt.

Vor der inhaltlichen Analyse des Textes TXT, der in ASCII-Format vorliegt, wird eine morphologische Analyse durchgeführt. Dazu werden im ersten Schritt alle Wörter des Textes lemmatisiert, d.h. auf ihre Stammformen reduziert (dies erfolgt mit Hilfe eines Lemmatisierers LEM, der den lemmatisierten Text L-TXT liefert) und dann mit einem stochastischen Tagger TAG lexikalische Mehrdeutigkeiten aufgelöst. Ergebnis dieser Behandlung des Textes TXT ist der getaggte Text T-TXT, der dann weiterverarbeitet werden kann. Die Funktionsweise des Lemmatisierers LEM ist in [4] beschrieben, der Aufbau und die Funktion des Taggers in [5].

Ausgangspunkt der weiteren Bearbeitungsschritte ist nun der getaggte Text T-TXT.

Bevor die Textklassifikation durchgeführt werden kann, muß eine Trainingsphase vorgesehen werden. In dieser Trainingsphase wird ein Relevanzlexikon REL-LEX erzeugt, das später für die Klassifikation von Texten verwendet werden wird. Dazu wird aus einer Menge von Trainingstexten TXT-TR, deren Klassen KL-TXT bekannt sind, die Häufigkeit von Klassen, von Wörtern insgesamt und von Wörtern in den jeweiligen Klassen gezählt. Dies erfolgt in einer Einheit FR zur Frequenzberechnung, in der die Wortfrequenzen FR-W und die Klassenfrequenzen FR-KL gebildet werden. Mit diesen Häufigkeiten wird die empirische Korrelation zwischen einem Wort und einer Klasse nach Pearson [6] berechnet:

$$rlv(w \text{ in } c) := r(w,c) = \frac{N \cdot \sum wc - \sum w \cdot \sum c}{\sqrt{\left(N \cdot \sum w^2 - (\sum w)^2\right) \cdot \left(N \cdot \sum c^2 - (\sum c)^2\right)}}$$

dabei ist:

N=Anzahl der Trainingstexte,
$\sum$ wc=Anzahl der Trainingstexte der Klasse c mit Wort w,
$\sum$ w=Anzahl der Trainingstexte mit Wort w,
$\sum$ c=Anzahl der Trainingstexte der Klasse c.

Diese Korrelation wird für alle Wörter und alle Klassen berechnet und gilt als Relevanz REL eines Wortes für eine Klasse. Dabei wird beachtet, daß die Korrelationen nicht zu klein werden, es wird somit ein Wert r-max eingeführt, der z. B. auf einem Signifikanzniveau 0,001 eingestellt wird [7]. Die Ergebnisse, also die Relevanzen eines Wortes für eine Klasse werden in einem Lexikon REL-LEX abgespeichert, das also die Relevanzen der Wörter für die Klassen enthält.

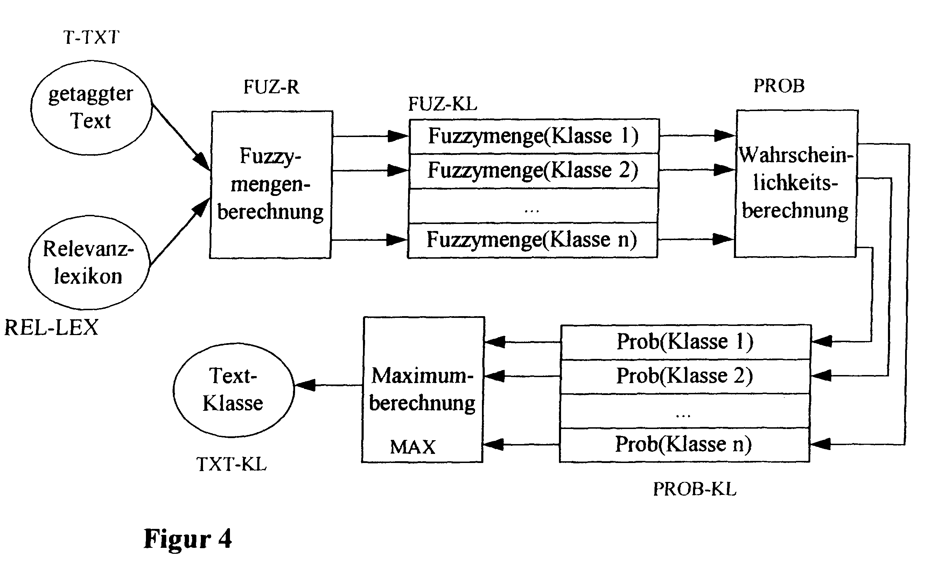

Nachdem das Relevanzlexikon REL-LEX erzeugt worden ist, kann nun der zu untersuchende Text T-TXT klassifiziert werden. Dazu werden ausgewählte Wörter des Textes, die von signifikanter Bedeutung sind, aus dem Text mit den im Relevanzlexikon REL-LEX vorhandenen Beziehungen zwischen den Wörtern und den Klassen untersucht und daraus für den Text und für jede Klasse eine unscharfe Menge, eine sogenannte Fuzzymenge FUZ-R, erzeugt. Diese Fuzzymengen pro Klasse werden in einer Datei FUZ-KL abgespeichert. Die Fuzzymenge pro Klasse enthält die Worte des Textes, die in der Klasse vorkommen und deren Relevanz für diese Klasse. Aus der Fuzzymenge wird für jede Klasse die Wahrscheinlichkeit ihrer unscharfen Menge von relevanten Wörtern in einer Einheit PROB berechnet und in einer Datei PROB-KL abgespeichert. Dazu wird die Zugehörigkeitsfunktion der unscharfen Menge zu der Klasse bestimmt, die gerade dem Korrelationsmaß von Pearson entspricht. Die Wahrscheinlichkeit wird nach der in der Fuzzy-Theorie gebräuchlichen Formel berechnet, diese Formel ist bereits oben angegeben worden und ist aus [8] bekannt. In einer Einheit MAX zur Maximumberechnung wird die Klasse ausgewählt, für die die höchste Wahrscheinlichkeit ausgerechnet worden ist. Dieser wird der Text T-TXT zugeordnet. Diese Klasse ist in Figur 4 mit TXT-KL benannt.

Das folgende Anwendungsbeispiel soll das Verfahren erläutern:

News aus der USENET-Newsgruppe de.comp.os.linux.misc sollen in die Klassen Drucker, Konfiguration, Netzwerk, Sound, Externer Speicher, Video, Software, Entwicklung, Kernel, Kommunikation, Eingabegeräte, SCSI, X-Windows und Betriebssystem einsortiert werden.

Der erste Bearbeitungsschritt eines Textes ist die morphologische Analyse. Sie transformiert z.B. den Satz *Beim Starten von X kommt mit der Mirage-P32 nur ein weißer Bildschirm* in die lemmatisierte Form:

```
0 1 Beim beim prp
1 2 starten starten vfin
1 2 starten starten vinfin
2 3 von von prp
3 4 X x n
4 5 kommt kommen vfin
5 6 mit mit prp
5 6 mit mit vprt
6 7 der d pron
6 7 der der det
6 7 der der relpron
7 8 Mirage mirage n
8 9 - - -
9 10 P32 p32 n
10 11 nur nur adv
11 12 ein ein det
11 12 ein ein vprt
12 13 weisser weiss adjflk
13 14 Bildschirm bildschirm n
13 15 Bildschirm. bildschirm. $$$
13 14 Bildschirm. bildschirm. $$$
```

```
14 15 . . eos_punkt
14 15 . . punkt
15 16 $CR$ $CR $CR$
```

Der Tagger löst die Mehrdeutigkeiten bei Kategorien und Grundformen auf:

```
0 1 Beim beim prp
1 2 starten starten vfin
2 3 von von prp
3 4 X x n
4 5 kommt kommen vfin
5 6 mit mit prp
6 7 der der det
7 8 Mirage mirage n
8 9 - - -
9 10 P32 p32 n
10 11 nur nur adv
11 12 ein ein det
12 13 weisser weiss adjflk
13 14 Bildschirm bildschirm n
14 15 . . eos_punkt
```

Im Training wurde folgendes Relevanzlexikon trainiert (Ausschnitt) :

```
soundkarte_n
        <konfiguration> rlv = 0.012523
        <netzwerk> rlv = -0.033766
        <sound> rlv = 0.716692
        <externer speicher> rlv = -0.005260

monitor_n
        <video> rlv = 0.606806

drucker_n
        <drucker> rlv = 0.683538
        <software> rlv = 0.014210

gcc_n
        <entwicklung> rlv = 0.684036
        <kernel> rlv = 0.103325
        <kommunikation> rlv = -0.083844

apsfilter_n
        <drucker> rlv = 0.561354

grafikkarte_n
        <eingabegeraete> rlv = -0.008924
        <konfiguration> rlv = 0.017783
        <scsi> rlv = -0.005854
        <video> rlv = 0.501108

xdm_n
        <eingabegeraete> rlv = 0.023704
        <x-windows> rlv = 0.580419

scsi_n
        <eingabegeraete> rlv = -0.065260
        <kernel> rlv = -0.026075
```

<konfiguration> rlv = 0.117458
<netzwerk> rlv = -0.035671
<betriebssystem> rlv = -0.063972
<scsi> rlv = 0.582414
<sound> rlv = -0.041297
<externer speicher> rlv = 0.284832
<video> rlv = -0.107000

ethernet_n
<kommunikation> rlv = -0.012769
<netzwerk> rlv = 0.502532
<betriebssystem> rlv = 0.014134

x_n
<drucker> rlv = -0.073611
<eingabegeraete> rlv = 0.005764
<entwicklung> rlv = 0.073568
<kernel> rlv = 0.005127
<kommunikation> rlv = -0.108931
<konfiguration> rlv = -0.055763
<netzwerk> rlv = -0.077721
<betriebssystem> rlv = -0.046266
<scsi> rlv = -0.054152
<sound> rlv = -0.037581
<externe speicher> rlv = -0.081716
<software> rlv = 0.037474
<video> rlv = 0.197814
<x-winows> rlv = 0.299126

mirage_n
<scsi> rlv = 0.065466
<video> rlv = 0.221600

bildschirm_n
<drucker> rlv = -0.023347
<eingabegeraete> rlv = 0.036846
<entwicklung> rlv = -0.022288
<konfiguration> rlv = -0.014284
<video> rlv = 0.216536
<x-windows> rlv = 0.269369

starten_vinfin
<kommunikation> rlv = 0.002855
<konfiguration> rlv = 0.060185
<betriebssystem> rlv = 0.006041
<externe speicher> rlv = -0.001856
<x-windows> rlv = 0.260549

starten_vfin
<drucker> rlv = -0.038927
<entwicklung> rlv = -0.037790
<kernel> rlv = -0.009309
<kommunikation> rlv = -0.057605
<konfiguration> rlv = 0.035588
<netzwerk> rlv = 0.045992
<betriebssystem> rlv = -0.003344
<sound> rlv = -0.019409
<externe speicher> rlv = -0.043312

<video> rlv = 0.110620
<x-windows> rlv = 0.178526

Nun werden für die Klassen die Fuzzy-Mengen gebildet:
Video = {x(0.197814),mirage(0.221600),bildschirm(0.216536)} X-Windows = {starten(0.178526),x(0.299126),bildschirm(0.269369)}

Weiterhin sind bekannt die Wahrscheinlichkeiten der Wörter:

| Wort | Video | X-Windows |
|------|-------|-----------|
| x | 0.24 | 0.19 |
| mirage | 0.8 | |
| bildschirm | 0.43 | 0.33 |
| starten | 0.24 | 0.21 |

Hieraus und aus den Zugehörigkeitsfunktionen der Wörter berechnen wir die Wahrscheinlichkeiten der Klassen:
Prob(Video) = 0.197814*0.24 + 0.221600*0.8 + 0.216536*0.43
Prob(X-Windows) = 0.178526*0.21 + 0.299126*0.19 + 0.269369*0.33
Prob(Video) = 0.3
Prob(X-Windows) = 0.18

Literaturverzeichnis

[1] A. Dengel et al., 'Office Maid- A System for Office Mail Analysis, Interpretation and Delivery', Int. Workshop on Document Analysis Systems (DAS)$), Kaiserslautern (1994), S 253-275.

[2] M. Malburg und A. Dengel, ' Address Verification in Structured Documents for Automatic Mail Delivery', Proc. JetPoste 93, First European Conference on Postal Technologies, Vol. 1, Nantes, Frankreich (1993), S. 447-454.

[3] R. Hoch, ' Using IR Techniques for Text Classification in Document Analysis', Proc. of 17th International Conference on Research and Development in Information Retrieval (SIGIR94), Dublin, Irland, (1994).

[4] LDV-Forum, Band 11, Nummer 1 (1994), S. 17-29.

[5] E. Charniak, "Statistical Language Learning", MIT Press, Cambridge (1993),S. 45-56.

[6] H. Weber, 'Einführung in die Wahrscheinlichkeitsrechnung und Statistik für Ingenieure', 3. Auflage, Teubner, Stuttgart (1992) S. 193-194.

[7] H. Weber, 'Einführung in die Wahrscheinlichkeitsrechnung und Statistik für Ingenieure', 3. Auflage, Teubner, Stuttgart (1992) S. 244

[8] H. Bandemer und S. Gottwald, 'Einführung in Fuzzy-Methoden', 4.Auflage, Akademie Verlag, Berlin (1993), S. 161

**Patentansprüche**

1. Verfahren zur automatischen Klassifikation eines auf einem Dokument aufgebrachten Textes nach dessen Transformation in digitale Daten mit Hilfe eines Rechners,

   - bei dem jede Textklasse durch signifikante Wörter definiert ist,
   - bei dem in einer Lexikondatei (REL-LEX) für jede Textklasse die signifikanten Wörter und deren Signifikanz für die Textklasse gespeichert werden,
   - bei dem ein zuzuordnender Text mit allen Textklassen verglichen wird und für jede Textklasse die unscharfe Menge, das heißt die Fuzzymenge, von Worten in Text und Textklasse und deren Signifikanz für die Textklasse ermittelt wird,
   - bei dem aus der Fuzzymenge jeder Textklasse und deren Signifikanz für jede Textklasse die Wahrscheinlichkeit der Zuordnung des Textes zu der Textklasse ermittelt wird,
   - bei dem die Textklasse mit der höchsten Wahrscheinlichkeit gewählt wird und dieser der Text zugeordnet wird.

**2.** Verfahren nach Anspruch 1,

- bei dem der zu klassifizierende Text vor der Inhaltsanalyse in einem Lemmatisierer (LEM) lemmatisiert wird,
- bei dem der lemmatiserte Text (L-TXT) einem stochastischen Tagger (TAG) zugeführt wird, um lexikalische Mehrdeutigkeiten aufzulösen,
- und bei dem der getaggte Text (T-TXT) zur Textklassifikation verwendet wird.

**3.** Verfahren nach Anspruch 2,

- bei dem zur Klassifikation des Textes ein Relevanzlexikon (REL-LEX) erzeugt wird,
- bei dem dazu eine Menge von Trainingstexten, deren Klassen bekannt sind, verwendet wird,
- bei dem aus dieser Menge die Häufigkeit der Klassen, von Wörtern und von Wörtern in den jeweiligen Klassen gezählt wird,
- bei dem mit diesen Häufigkeiten eine empirische Korrelation zwischen einem Wort und einer Klasse berechnet wird,
- bei dem diese Korrelation für alle Wörter und alle Klassen berechnet wird und das Ergebnis der Berechnung als Relevanz eines Wortes für eine Klasse in einer Datei gespeichert wird, die als Relevanzdatei oder Relevanzlexikon (REL-LEX) verwendet wird.

**4.** Verfahren nach Anspruch 3,
bei dem die Korrelation, das heißt die Relevanz, zwischen einem Wort und einer Klasse nach folgender Formel erfolgt:

$$\mathtt{rlv(w\ in\ c):=r(w,c)} = \frac{N \cdot \sum wc - \sum w \cdot \sum c}{\sqrt{\left(N \cdot \sum w^2 - (\sum w)^2\right) \cdot \left(N \cdot \sum c^2 - (\sum c)^2\right)}}$$

dabei ist:

N=Anzahl der Trainingstexte,
$\sum$ wc=Anzahl der Trainingstexte der Klasse c mit Wort w,
$\sum$ w=Anzahl der Trainingstexte mit Wort w,
$\sum$ c=Anzahl der Trainingstexte der Klasse c.

**5.** Verfahren nach Anspruch 4,
bei dem nur Korrelationen > einem gewählten Wert r-max berücksichtigt werden, der auf einem Signifikanzniveau von z. B. 0.001 festgelegt wird.

**6.** Verfahren nach Anspruch 5,

- bei dem der zu untersuchende Text (T-TXT) und das Relevanzlexikon (REL-LEX) dazu verwendet werden, um für jede Klasse die unscharfe Menge, das heißt die Fuzzymenge, der signifikanten Wörter pro Klasse und deren Relevanz pro Klasse zu ermitteln,
- bei dem aus der Fuzzymenge pro Klasse und deren Relevanz für jede Klasse die Wahrscheinlichkeit ihrer unscharfen Menge von relevanten Wörtern berechnet wird,
- bei dem aus den Wahrscheinlichkeiten pro Klasse die Klasse mit der maximalen Wahrscheinlichkeit ermittelt wird und dieser Klasse der Text zugeordnet wird.

**7.** Verfahren nach Anspruch 6,
bei dem die Berechnung der Wahrscheinlichkeit nach der Formel

$$\mathtt{prob(A):=} \sum_{x} \mu_A(x) \cdot p(x),$$

erfolgt, wobei $\mu_A$ die Zugehörigkeitsfunktion bedeutet, die angibt, in wieweit die Fuzzymenge einer Klasse zugeordnet wird, und die gerade dem Korrelationsmaß nach obiger Formel entspricht.

8. Verwendung des Verfahrens nach einem der vorhergehenden Ansprüche zur automatischen Diagnose aus medizinischen Befunden,

bei dem medizinische Befunde als Text und eine Krankheit als eine Klasse aufgefaßt wird,
bei dem in einer Trainingsphase das zur Klassifikation erforderliche Wissen aus einer Menge von Befunden, deren Diagnose bekannt ist, automatisch gelernt wird
und bei dem ein neuer Befund nach der Technik der Fuzzymengen klassifiziert wird.

**Claims**

1. Method for the automatic classification of a text applied to a document, after the said text has been transformed into digital data with the aid of a computer,

   • in which each text class is defined by significant words,
   • in which the significant words and their significance to the text class are stored in a lexicon file (REL-LEX) for each text class,
   • in which a text to be allocated is compared with all text classes and, for each text class, the fuzzy set of words in text and text class and its significance to the text class is determined,
   • in which the probability of the allocation of the text to the text class is determined from the fuzzy set of each text class and its significance to each text class,
   • in which text class with the highest probability is selected and the text is allocated to this class.

2. Method according to Claim 1,

   • in which the text to be classified is morphologically analysed in a morphological analyser (LEM) preceding the contents analysis,
   • in which the morphologically analysed text (L-TXT) is supplied to a stochastic tagger (TAG) in order to resolve lexical ambiguities,
   • and in which the tagged text (T-TXT) is used for text classification.

3. Method according to Claim 2,

   • in which a relevance lexicon (REL-LEX) is generated for the classification of the text,
   • in which, for this purpose, a set of training texts is used, the classes of which are known,
   • in which the frequencies of the classes, of words and of words in the respective classes are counted from this set,
   • in which an empirical correlation between a word and class is calculated by means of these frequencies,
   • in which this correlation is calculated for all words and all classes and the result of the calculation is stored in a file as relevance of a word to a class, which file is used as relevance file or relevance lexicon (REL-LEX).

4. Method according to Claim 3, in which the correlation, that is to say the relevance, between a word and a class is established in accordance with the following formula:

$$\mathrm{rlv}(w \text{ in } c) := r(w,c) = \frac{N \cdot \sum wc - \sum w \cdot \sum c}{\sqrt{\left(N \cdot \sum w^2 - (\sum w)^2\right) \cdot \left(N \cdot \sum c^2 - (\sum c)^2\right)}}$$

where:

N = number of training texts,
$\sum wc$ = number of training texts of class c with word w,
$\sum w$ = number of training texts with word w,

$\Sigma$ c = number of training texts of class c.

**5.** Method according to Claim 4, in which only correlations > a selected value r-max are taken into consideration, which value is established at a significance level of e.g. 0.001.

**6.** Method according to Claim 5,

- in which the text (T-TXT) to be examined and relevance lexicon (REL-LEX) are used for determining for each class the fuzzy set of significant words per class and its relevance per class,
- in which, from the fuzzy set per class and its relevance to each class, the probability of its fuzzy set of relevant words is calculated,
- in which the class with the maximum probability is determined from the probabilities per class and the text is allocated to this class.

**7.** Method according to Claim 6, in which the probability is calculated in accordance with the formula

$$\mathtt{prob(A):} = \Sigma_x \ \mu_A(x) \cdot p(x),$$

where $\mu_A$ is the membership function which specifies the extent to which the fuzzy set is allocated to a class, and which just corresponds to the correlation measure according to the above formula.

**8.** Use of the method according to one of the preceding claims for automatic diagnosis from medical findings,

in which the medical findings are considered to be the text and an illness is considered to be a class, in which method, in a training phase, the knowledge required for the classification is automatically learnt from a set of findings the diagnosis of which is known, and in which a new finding is classified in accordance with the technique of fuzzy sets.


**Revendications**

**1.** Procédé de classification automatique d'un texte mis sur un document après sa transformation en données numériques à l'aide d'un ordinateur,

- dans lequel on définit chaque classe par des mots significatifs,
- dans lequel on met en mémoire dans un fichier (REL-LEX) de lexique pour chaque classe de texte les mots significatifs et leur signification pour la classe de texte,
- dans lequel on compare un texte à affecter à toutes les classes de texte et on détermine pour chaque classe de texte la quantité imprécise, c'est-à-dire la quantité floue, de mots en texte et en classe de texte et sa signification pour la classe de texte,
- dans lequel on détermine à partir de la quantité floue de chaque classe de texte et de sa signification pour chaque classe de texte la probabilité de l'affectation du texte à la classe de texte,
- dans lequel on choisit la classe de texte ayant la plus grande probabilité et on l'affecte au texte.

**2.** Procédé suivant la revendication 1,

- dans lequel on pose comme LEM dans un poseur (LEM) de LEM le texte à classer avant l'analyse de contenu,
- dans lequel on envoie le texte (L-TXT) posé comme LEM à un étiquetage (TAG) stochastique afin de résoudre une polysémie lexicale,
- et dans lequel on utilise le texte (T-TXT) étiqueté pour la classification de texte.

**3.** Procédé suivant la revendication 2,

- dans lequel on produit un lexique (REL-LEX) de pertinence pour la classification du texte,
- dans lequel on utilise à cet effet une quantité de texte d'apprentissage dont les classes sont connues,

- dans lequel on compte dans cette quantité la fréquence des classes, de mots et de- mots dans les classes associées,
- dans lequel on calcule par ces fréquences une corrélation empirique entre un mot et une classe,
- dans lequel on calcule cette corrélation pour tous les mots et toutes les classes et on met en mémoire dans un fichier le résultat du calcul comme pertinence d'un mot pour une classe, ledit fichier étant utilisé comme fichier de pertinence ou lexique (REL-LEX) de pertinence.

**4.** Procédé suivant la revendication 3,
dans lequel la corrélation, c'est-à-dire la pertinence, entre un mot et une classe est obtenue suivant la formule suivante :

$$rlv(w \text{ en } c) := r(w,c) = \frac{N \cdot \sum wc - \sum w \cdot \sum c}{\sqrt{\left(N \cdot \sum w^2 - (\sum w)^2\right) \cdot \left(N \cdot \sum c^2 - (\sum c)^2\right)}}$$

avec :

$N$ = nombre des textes d'apprentissage,
$\Sigma wc$ = nombre des textes d'apprentissage de la classe c ayant le mot w,
$\Sigma w$ = nombre des textes d'apprentissage ayant le mot w,
$\Sigma c$ = nombre des textes d'apprentissage de la classe c.

**5.** Procédé suivant la revendication 4,
dans lequel on ne tient compte que des corrélations > une valeur r-max choisie qui est fixée à un niveau de signification de par exemple 0.001.

**6.** Procédé suivant la revendication 5,

- dans lequel on utilise le texte (T-TXT) à investiguer et le lexique (REL-LEX) de pertinence pour déterminer pour chaque classe la quantité imprécise, c'est-à-dire la quantité floue, des mots significatifs par classe et sa pertinence par classe,
- dans lequel on calcule à partir de la quantité floue par classe et de sa pertinence pour chaque classe la probabilité de sa quantité imprécise de mots pertinents,
- dans lequel on détermine à partir des probabilités par classe la classe ayant la probabilité maximum et on affecte le texte à cette classe.

**7.** Procédé suivant la revendication 6,
dans lequel on effectue le calcul de la probabilité suivant la formule

$$prob(A) := \sum_{x} \mu_A(x) \cdot p(x),$$

$\mu_A$ signifiant la fonction d'appartenance qui indique dans quelle mesure la quantité floue est affectée à une classe, et qui correspond exactement à la mesure de corrélation suivant la formule ci-dessus.

**8.** Utilisation du procédé suivant l'une des revendications précédentes pour des diagnostics automatiques à partir de rapports médicaux,

dans laquelle on interprète le rapport médical comme texte et une maladie comme une classe,
dans laquelle le savoir nécessaire à la classification est appris automatiquement lors d'une phase d'apprentissage à partir d'une quantité de rapports dont le diagnostic est connu,
et dans laquelle un nouveau rapport est classé suivant la technique des quantités floues.

Figur 1

TXT

Text
in ASCII

LEM

Lemmatisierer

L-TXT

lemmatisierter
Text

TAG

Stochastischer
Tagger

T-TXT

getaggter
Text

**Figur 2**

EP 0 891 593 B1

EP 0 891 593 B1

TXT-TR  KL-TXT

FR-W

| Text 1 | Klasse(Text 1) |
| Text 2 | Klasse(Text 2) |
| ... | ... |
| Text n | Klasse(Text n) |

FR
Frequenzberechnung

Wortfrequenzen

Klassenfrequenzen

FR-KL

REL
Relevanzberechnung

REL-LEX

Relevanzlexikon

**Figur 3**

T-TXT

getaggter
Text

FUZ-R

Fuzzymengenberechnung

FUZ-KL

| Fuzzymenge(Klasse 1) |
| Fuzzymenge(Klasse 2) |
| ... |
| Fuzzymenge(Klasse n) |

PROB

Wahrscheinlichkeitsberechnung

Relevanzlexikon

REL-LEX

Text-
Klasse

TXT-KL

Maximumberechnung

MAX

| Prob(Klasse 1) |
| Prob(Klasse 2) |
| ... |
| Prob(Klasse n) |

PROB-KL

**Figur 4**

EP 0 891 593 B1